# EUROPÄISCHE PATENTSCHRIFT

(11) **EP 1 420 998 B1**
(45) Veröffentlichungstag und Bekanntmachung des Hinweises auf die Patenterteilung: **03.05.2006**
(21) Anmeldenummer: 02796181.2
(22) Anmeldetag: 27.08.2002
(51) Int. Cl.: B62K 5/04, B62K 25/24

(54) **MOTORFAHRZEUG MIT EINEM ANGETRIEBENEN HINTERRAD UND ZWEI GELENKTEN VORDDERRÄDERN**
MOTOR VEHICLE COMPRISING A DRIVEN REAR WHEEL AND TWO ARTICULATED FRONT WHEELS
VEHICULE AUTOMOBILE DOTE D'UNE ROUE ARRIERE ENTRAINEE ET DE DEUX ROUES AVANT MOTRICES

(30) Priorität: 30.08.2001 AT 13722001
(43) Veröffentlichungstag der Anmeldung: 26.05.2004
(73) Patentinhaber: Hans Leeb Zweirad Handel GmbH, 9400 Wolfsberg (AT)
(72) Erfinder: LEEB, Hans, A-9400 Wolfsberg (AT)
(74) Vertreter: Hübscher, Helmut
(86) Internationale Anmeldenummer: PCT/AT2002/000252
(87) Internationale Veröffentlichungsnummer: WO 2003/018390

(56) Entgegenhaltungen:
- WO-A-97/21583
- DE-B- 1 063 473
- DE-U- 29 701 408
- FR-A- 2 486 899
- US-A- 4 723 785
- US-A- 4 834 408
- US-B1- 6 263 994

## Beschreibung

### Technisches Gebiet

Die Erfindung bezieht sich auf Motorfahrzeug mit einem angetriebenen Hinterrad und zwei gelenkten Vorderrädern, wobei die gegenüber einem Fahrzeugrahmen der Höhe nach gegensinnig verlagerbaren Vorderräder auf Achsschenkelbolzen gelagerte Achsschenkel aufweisen, deren Spurhebel über ein Lenkgestänge verstellbar sind.

### Stand der Technik

Um bei Motorfahrzeugen dieser Art die Vorderräder zusammen mit dem Fahrzeugrahmen für die Kurvenfahrt schrägstellen zu können, ist es bekannt (WO 97/21583 A1), die Vorderräder an einem quer zur Fahrzeuglängsrichtung ausgerichteten Gelenkparallelogramm anzuordnen, das in der Mitte seiner parallelen Lenker um in Fahrzeuglängsrichtung verlaufende Schwenkachsen am Fahrzeugrahmen angelenkt ist, so daß bei einer Seitenneigung des Rahmens das Gelenkparallelogramm eine entsprechende Verlagerung mit der Wirkung erfährt, daß sich die Vorderräder gleichsinnig mit dem Fahrzeugrahmen schrägstellen. Die Achsschenkel der Vorderräder sind zur Lenkung auf Achsschenkelbolzen gelagert und können über durch eine Spurstange verbundene Spurhebel verschwenkt werden. Zu diesem Zweck ist die Spurstange mit einem Lenkgestänge verbunden, das mit Hilfe eines Handlenkers betätigt werden kann. Zur Abfederung der Vorderräder sind die am Fahrzeugrahmen gelagerten Lenker des Gelenkparallelogramms gelenkig unterteilt, wobei die sich aufgrund der gelenkigen Unterteilung ergebenden Außenteile der Lenker gegenüber einem Mittelteil durch je eine Federung abgestützt sind. Nachteilig bei diesen bekannten Motorfahrzeugen ist vor allem, daß aufgrund der Anordnung der Vorderräder an einem quer zur Fahrzeuglängsrichtung verlaufenden Gelenkparallelogramm die mögliche Schräglage bei Kurvenfahrten beschränkt ist und durch die vergleichsweise geringe Bodenfreiheit die Geländegängigkeit des Motorfahrzeugs leidet.

### Darstellung der Erfindung

Der Erfindung liegt somit die Aufgabe zugrunde, ein Motorfahrzeug mit einem angetriebenen Hinterrad und zwei gelenkten Vorderrädern der eingangs geschilderten Art so auszugestalten, daß die Geländegängigkeit und Schräglagenfreiheit entscheidend verbessert werden.

Die Erfindung löst die gestellte Aufgabe dadurch, daß der Fahrzeugrahmen zwei um eine Querachse verschwenkbare Längsschwingen für die Vorderräder trägt, daß die Längsschwingen über Stützhebel an den gegenüberliegenden Armen eines doppelarmigen, um eine mittige Längsachse drehbaren Ausgleichshebels angelenkt sind und an ihren freien Enden zur Schwenkachse parallele Schwenklager für die Achsschenkelbolzen aufnehmende Lagerkörper aufweisen, die über mit den Längsschwingen eine Gelenkparallelogrammführung ergebenden Führungslenkern am Fahrzeugrahmen abgestützt sind, und daß die Spurhebel mit dem übrigen Lenkgestänge verbindende Lenkstangen zumindest in der Lenkstellung für die Geradeausfahrt mit den Längsschwingen ein Gelenkparallelogramm bilden.

Durch die Anordnung von die Vorderräder aufnehmenden Längsschwingen, die um eine Querachse verschwenkbar im Fahrzeugrahmen gelagert sind, machen die Vorderräder alle Schrägstellungen des Fahrzeugrahmens um eine Längsachse zwangsläufig mit, so daß es hiefür keiner gesonderten konstruktiven Maßnahmen bedarf. Die Verbindung der beiden Längsschwingen über einen um eine Längsachse drehbaren, doppelarmigen Ausgleichshebel, an dessen gegenüberliegenden Armen an den Längsschwingen angreifende Stützhebel angelenkt sind, stellt die für eine Seitenneigung des Motorfahrzeugs bei gleichzeitiger Bodenhaftung beider Vorderräder erforderliche gegensinnige Höhenverlagerung der Vorderräder sicher, und zwar unter einer vorteilhaften Boden- und Schräglagenfreiheit. Die für die Fahreigenschaften wesentlichen Längsschwingen zur Aufnahme der Vorderräder erfordern allerdings konstruktive Maßnahmen, um mit einer Schwenkverstellung der Längsschwingen verbundene Lenkeinschläge der Vorderräder zu vermeiden. Zu diesem Zweck werden die Achsschenkelbolzen auf Lagerkörpern angeordnet, die an den freien Enden der Längsschwingen parallel zu deren Schwenkachse drehbar gelagert und über eine Gelenkparallelogrammführung am Fahrzeugrahmen abgestützt sind, so daß die Achsschenkelbolzen beim Verschwenken der Längsschwingen nicht mitgeschwenkt, sondern lediglich parallel zu sich selbst verlagert werden. Unter dieser Voraussetzung läßt sich in einfacher Weise eine herkömmliche Lenkung der Vorderräder über ein Lenkgestänge einsetzen, wenn dafür gesorgt wird, daß die mit den Achsschenkeln um die Achsschenkelbolzen schwenkbaren Spurhebel mit dem übrigen Lenkgestänge durch Lenkstangen verbunden sind, die zumindest in der Lenkstellung für die Geradeausfahrt mit den Längsschwingen ein Gelenkparallelogramm bilden, so daß eine Lenkbewegung der Spurhebel über die Lenkstangen unterbunden wird, so lange das Lenkgestänge nicht im Sinne einer Lenkbewegung betätigt wird. Die Gelenkparallelogrammführung für die die Achsschenkelbolzen aufnehmenden Lagerkörper kann mit einem vergleichsweise einfachen Konstruktionsaufwand erzwungen werden, wenn die Längsschwingen einen Teil der Gelenkparallelogrammführung ergeben, der mit einerseits am jeweiligen Lagerkörper und am Fahrzeugrahmen angelenkten Führungslenkern in Form eines Gelenkparallelogrammes zusammenwirkt.

Der zur gegensinnigen Höhenverlagerung der Vorderräder vorgesehene Ausgleichshebel zwischen den Längsschwingen bietet eine vorteilhafte Voraussetzung für eine gemeinsame Abfederung beider Vorderräder, weil in diesem Fall lediglich die Längsachse zur mittigen Lagerung des Ausgleichshebels der Höhe nach verlagerbar geführt und über eine Federung gegenüber dem Fahrzeugrahmen abzustützen ist. Obwohl die Längsachse zur Lagerung des Ausgleichshebels in konstruktiv unterschiedlicher Weise der Höhe nach verschiebbar geführt werden kann, ergeben sich besonders vorteilhafte Konstruktionsverhältnisse, wenn diese Längsachse an einem parallel zu den Längsschwingen am Fahrzeugrahmen angelenkten Schwenkhebel angeordnet ist, an dem ein am Fahrzeugrahmen gelagertes Federbein angreift. Durch das Vorsehen eines am Fahrzeugrahmen angelenkten Schwenkhebels, der an seinem dem Anlenklager gegenüberliegenden Ende über ein Federbein am Fahrzeugrahmen abgestützt wird, können zur Verlagerung der Längsachse des Ausgleichshebels hinsichtlich der Lagerung einfache Drehbewegungen vorgesehen werden, wobei aufgrund der möglichen Übersetzungsverhältnisse eine gute Abstimmung der Federkräfte erzielt werden kann. Mit der Federung kann zugleich eine Dämpfung am Schwenkhebel für die Verstellung der Lagerung des Ausgleichshebels angreifen. Es ist selbstverständlich aber auch möglich, diese Dämpfung getrennt von der Federung vorzusehen.

### Kurze Beschreibung der Zeichnung

In der Zeichnung ist der Erfindungsgegenstand beispielsweise dargestellt. Es zeigen
- Fig. 1: ein erfindungsgemäßes Motorfahrzeug mit einem angetriebenen Hinterrad und zwei gelenkten Vorderrädern in einer schematischen, zum Teil aufgerissenen Seitenansicht,
- Fig. 2: dieses Motorfahrzeug im Bereich der die Vorderräder aufnehmenden Längsschwingen in einer schematischen, teilweise aufgerissenen Draufsicht in einem größeren Maßstab und
- Fig. 3: einen Schnitt nach der Linie III-III der Fig. 2 in einem größeren Maßstab.

### Bester Weg zur Ausführung der Erfindung

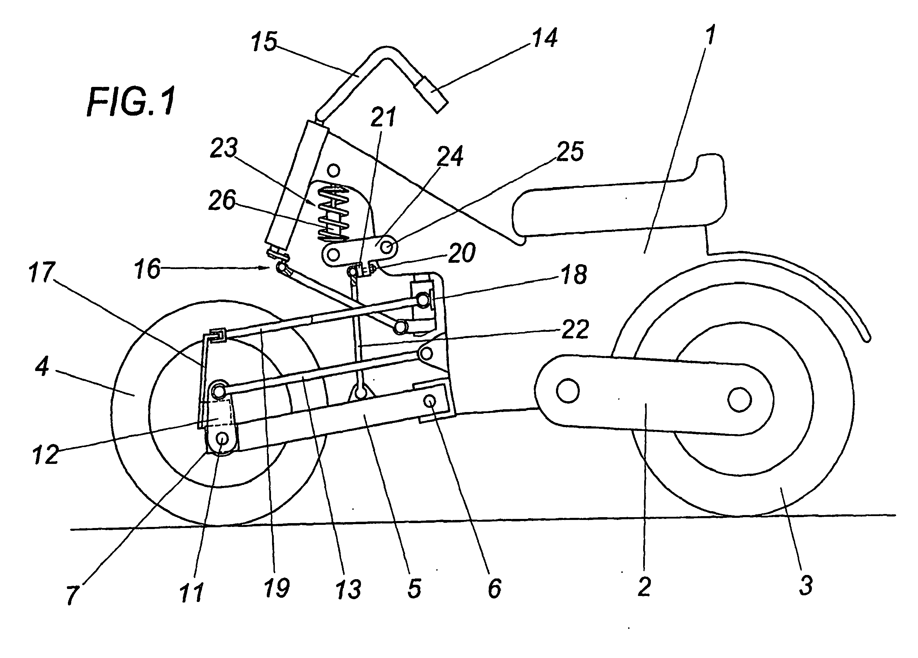

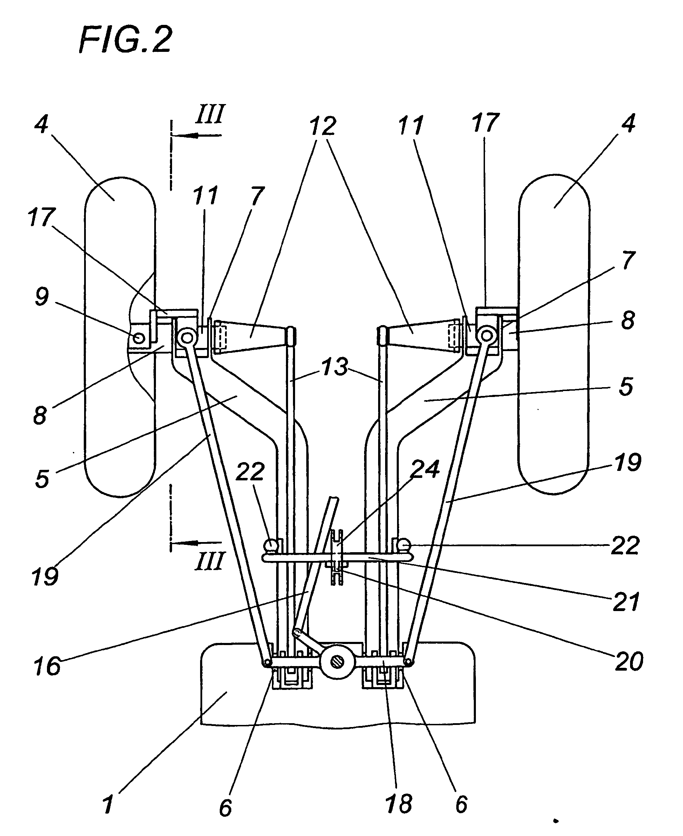

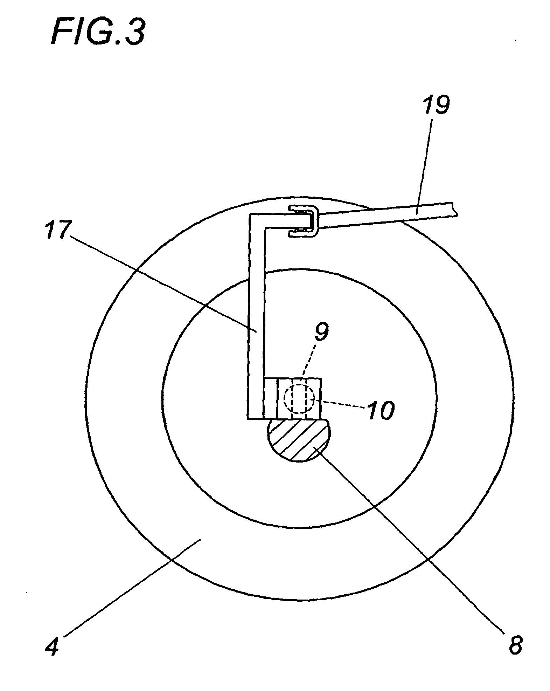

Das in der Fig. 1 schematisch dargestellte Motorfahrzeug weist einen Fahrzeugrahmen 1 mit einem angetriebenen, nach Art eines Motorrades in einer Hinterradschwinge 2 gelagertes Hinterrad 3 und zwei Vorderräder 4 auf, die über je eine Längsschwinge 5 am Fahrzeugrahmen 1 angelenkt sind, und zwar um eine Querachse 6. Die Vorderräder 4 könnten ebenfalls angetrieben werden, und zwar zusammen mit dem Hinterrad 3 oder auch nur alleine. Aus Übersichtlichkeitsgründen ist in der Fig. 1 das dem Betrachter zugekehrte Vorderrad 4 mit der zugehörigen Schwinge 5 weggelassen worden. Wie sich im Zusammenhang mit den Fig. 2 und 3 ergibt, bilden die Längsschwingen 5 im Bereich ihres vorderen, freien Endes ein zu ihrer Schwenkachse 6 paralleles Schwenklager 7 für einen Lagerkörper 8, auf dem der Achsschenkelbolzen 9 zur Aufnahme des Achsschenkels 10 angeordnet ist. Der Lagerkörper 8 wird dabei über einen angesetzten Wellenstummel 11 im Schwenklager 7 der jeweiligen Längsschwinge 5 drehbar gehalten. Mit diesem Wellenstummel 11 ist ein Schwenkarm 12 drehfest verbunden, der über einen Führungslenker 13 am Fahrzeugrahmen angelenkt ist und zusammen mit der zugehörigen Längsschwinge 5 eine Gelenkparallelogrammführung für den Lagerkörper 8 bildet, so daß sich beim Verschwenken der Längsschwingen 5 um ihre Schwenkachse 6 die Achsschenkelbolzen 9 lediglich parallel zu sich selbst verlagern können. Dies stellt eine wesentliche Voraussetzung für eine von der Schwenkbewegung der Längsschwingen 5 unabhängigen Lenkung der Vorderräder 4 dar. Diese Lenkung erfolgt über einen im Fahrzeugrahmen 1 drehbar gelagerten, mit Handgriffen 14 versehenen Lenker 15, der über ein Lenkgestänge 16 mit an den Achsschenkeln 10 angreifenden Spurhebeln 17 verbunden ist. Dieses Lenkgestänge 16 umfaßt einen doppelarmigen Lenkhebel 18, der an seinen beiden Enden über Lenkstangen 19 mit den Spurhebeln 17 verbunden ist. Wird über den Lenker 15 das Lenkgestänge 16 betätigt, so wird der Lenkhebel 18 verschwenkt, was eine Verschwenkung der Spurhebel 17 um die Achsschenkelbolzen 9 und damit einen entsprechenden Lenkeinschlag der Vorderräder 4 zur Folge hat. Wie aus der Fig. 1 entnommen werden kann, bilden die Lenkstangen 19 zusammen mit den Längsschwingen 5 zumindest in der Lenkstellung für die Geradeausfahrt ein Gelenkparallelogramm, das eine Lenkverschwenkung der Spurhebel 17 zufolge einer Schwenkbewegung der Längsschwingen 5 um ihre Schwenkachse 6 verhindert, wenn das Lenkgestänge 16 nicht betätigt wird. Zur Berücksichtigung mehrachsiger Schwenkverstellungen sind die davon betroffenen Lager kugelig ausgebildet.

Damit bei einer Neigung des Fahrzeugrahmens 1 um eine Längsachse die Bodenhaftung beider Vorderräder 4 sichergestellt wird, müssen die Längsschwingen 5 gegensinnig verschwenkt werden. Zu diesem Zweck ist ein um eine Längsachse 20 drehbarer, doppelarmiger Ausgleichshebel 21 vorgesehen, an dessen einander gegenüberliegenden Armen an den Längsschwingen 5 angreifende Stützhebel 22 angelenkt sind. Wird somit eine der beiden Längsschwingen 5 hochgeschwenkt, so wird über den Ausgleichshebel 21 die jeweils andere Längsschwinge 5 abgeschwenkt, womit die angestrebte gegensinnige Höhenverlagerung der Vorderräder beim Schrägstellen des Motorfahrzeugs sichergestellt wird. Diese für eine Kurvenfahrt vorteilhafte gegensinnige Verschwenkbarkeit der Längsschwingen 5 führt allerdings zu einer instabilen Ruhestellung des Motorfahrzeugs. Um ein Kippen des Motorfahrzeugs bei Stillstand zu vermeiden, kann die freie Verschwenkbarkeit des Ausgleichshebels im Stillstand des Motorfahrzeugs gesperrt werden.

Um eine entsprechende Abfederung der Vorderräder 4 mit einfachen Mitteln zu erreichen, kann die zur mittigen Lagerung des Ausgleichshebels 21 dienende Längsachse 20 der Höhe nach gegenüber dem Fahrzeugrahmen 1 gegen die Kraft einer Federung 23 verlagert werden. Diese Höhenverlagerung kann in einfacher Weise konstruktiv dadurch erreicht werden, daß die Längsachse 20 auf einem Schwenkhebel 24 gelagert wird, der im Fahrzeugrahmen 1 um eine zur Schwenkachse 6 der Längsschwingen 5 parallele Achse 25 drehbar im Fahrzeugrahmen 1 gehalten wird und sich an der Federung 23 abstützt. Diese Federung 23 kann vorteilhaft als Federbein zusammen mit einem Schwingungsdämpfer 26 ausgebildet werden, der zwischen dem Schwenkhebel 24 und dem Fahrzeugrahmen 1 angelenkt ist.

Es braucht wohl nicht hervorgehoben zu werden, daß die Erfindung nicht auf das dargestellte Ausführungsbeispiel beschränkt ist, weil es nicht auf die jeweilige konstruktive Ausgestaltung ankommt, sondern darauf, daß die Vorderräder 4 auf Längsschwingen 5 gelagert sind, und zwar über eine Gelenkparallelogrammführung für den Achsschenkelbolzen 9, damit Schwenkbewegungen der Schwinghebel zu keiner Lenkbewegung führen. Darüber hinaus sind die Längsschwingen 5 über einen Ausgleichshebel 21 so zu verbinden, daß nur eine gegensinnige Schwenkbewegung der beiden Längsschwingen 5 möglich ist.

## Patentansprüche

1. Motorfahrzeug mit einem angetriebenen Hinterrad und zwei gelenkten Vorderrädern, wobei die gegenüber einem Fahrzeugrahmen der Höhe nach gegensinnig verlagerbaren Vorderräder auf Achsschenkelbolzen gelagerte Achsschenkel aufweisen, deren Spurhebel über ein Lenkgestänge verstellbar sind, **dadurch gekennzeichnet, daß** der Fahrzeugrahmen (1) zwei um eine Querachse (6) verschwenkbare Längsschwingen (5) für die Vorderräder (4) trägt, daß die Längsschwingen (5) über Stützhebel (22) an den gegenüberliegenden Armen eines doppelarmigen, um eine mittige Längsachse (20) drehbaren Ausgleichshebels (21) angelenkt sind und an ihren freien Enden zur Schwenkachse (6) parallele Schwenklager (7) für die Achsschenkelbolzen (9) aufnehmende Lagerkörper (8) aufweisen, die über mit den Längsschwingen (5) eine Gelenkparallelogrammführung ergebenden Führungslenkern (13) am Fahrzeugrahmen (1) abgestützt sind, und daß die Spurhebel (17) mit dem übrigen Lenkgestänge (16) verbindende Lenkstangen (19) zumindest in der Lenkstellung für die Geradeausfahrt mit den Längsschwingen (5) ein Gelenkparallelogramm bilden.

2. Motorfahrzeug nach Anspruch 1, **dadurch gekennzeichnet, daß** die Längsachse (20) zur mittigen Lagerung des Ausgleichshebels (21) der Höhe nach verlagerbar geführt und über eine Federung (23) gegenüber dem Fahrzeugrahmen (1) abgestützt ist.

3. Motorfahrzeug nach Anspruch 2, **dadurch gekennzeichnet, daß** die Längsachse (20) zur mittigen Lagerung des Ausgleichshebels (21) an einem parallel zu den Längsschwingen (5) am Fahrzeugrahmen (1) angelenkten Schwenkhebel (24) angeordnet ist, an dem ein am Fahrzeugrahmen (1) gelagertes Federbein angreift.

## Claims

1. Motor vehicle comprising a driven rear wheel and two articulated front wheels wherein the front wheels which can be moved in opposite directions in terms of height in relation to a vehicle frame comprise stub axles mounted on kingpins whose steering levers can be displaced via a steering linkage, **characterised in that** the vehicle frame (1) carries two longitudinal rocker arms (5) for the front wheels (4) which can be pivoted about a transverse axis (6), **in that** the longitudinal rocker arms (5) are linked by means of support levers (22) to the opposing arms of a two-armed equalising lever (21) which can be rotated about a central longitudinal axis (20) and have at their free ends pivot bearings (7) parallel to the pivot axis (6) for bearing bodies (8) receiving the kingpins (9) which are supported on the vehicle frame (1) by means of radius arms (13) producing an articulated parallelogram guide with the longitudinal rocker arms (5), and **in that** drag links (19) connecting the steering levers (17) to the rest of the steering linkage (16) form an articulated parallelogram with the longitudinal rocker arms (5) at least in the steering position for a straight trajectory.

2. Motor vehicle according to claim 1, **characterised in that** the longitudinal axis (20) is guided so as to be moveable in terms of height for the central bearing of the equalising lever (21) and is supported in relation to the vehicle frame (1) by means of a spring suspension (23).

3. Motor vehicle according to claim 2, **characterised in that** the longitudinal axis (20) is arranged for the central bearing of the equalising lever (21) on a pivot lever (24) linked to the vehicle frame (1) parallel to the longitudinal rocker arms (5), on which pivot lever (24) a strut mounted on the vehicle frame (1) engages.

## Revendications

1. Véhicule automobile comprenant une roue arrière entraînée et deux roues avant articulées, les roues avant, déplaçables en hauteur en sens inverse par rapport à un châssis de véhicule, présentant des fusées d'essieux montées sur des boulons de fusées d'essieux, dont les leviers d'alignement des roues sont manoeuvrables par une tringlerie de direction, **caractérisé en ce que** le châssis de véhicule (1) porte deux balanciers longitudinaux (5), pouvant pivoter autour d'un axe transversal (6), pour les roues avant (4), **en ce que** les balanciers longitudinaux (5) sont articulés, par des leviers d'appui (22), sur les deux bras opposés d'un levier d'équilibrage (21) à deux bras, monté à rotation autour d'un axe longitudinal (20) central et présentent, sur leurs extrémités libres, des corps de palier (8), recevant des paliers de pivotement (7), parallèles à l'axe de pivotement (6), pour les boulons de fusées d'essieux (9), corps de palier soutenus sur le châssis de véhicule (1), par l'intermédiaire de bras articulés de guidage (13), créant un guidage à parallélogramme articulé avec les balanciers longitudinaux (5), et **en ce que** les leviers d'alignement de roues (17) forment, avec des barres de direction (19) reliant au reste de la tringlerie de direction (16), au moins dans la position de direction pour le roulage en ligne droite, un parallélogramme articulé avec les balanciers longitudinaux (5).

2. Véhicule automobile selon la revendication 1, **caractérisé en ce que** l'axe longitudinal (20) est guidé de façon déplaçable en hauteur, pour produire un montage en palier central du levier d'équilibrage (21), et est soutenu par rapport au châssis de véhicule (1) par l'intermédiaire d'une suspension élastique (23).

3. Véhicule automobile selon la revendication 2, **caractérisé en ce que** l'axe longitudinal (20), pour obtenir un montage en palier central du levier d'équilibrage (21), est disposé sur un levier pivotant (24), articulé parallèlement aux balanciers longitudinaux (5) sur le châssis de véhicule (1), levier pivotant sur lequel agit une jambe de suspension montée sur le châssis de véhicule (1).
